# EUROPÄISCHE PATENTSCHRIFT

(11) **EP 4 249 334 B1**
(45) Veröffentlichungstag und Bekanntmachung des Hinweises auf die Patenterteilung: **06.08.2025**
(21) Anmeldenummer: 23162691.2
(22) Anmeldetag: 17.03.2023
(51) Int. Cl.: B60T 13/66, B60T 17/22

(54) **BREMSANORDNUNG, FAHRZEUG MIT BREMSANORDNUNG UND VERFAHREN ZU DEREN BETRIEB**
BRAKE ASSEMBLY, VEHICLE HAVING A BRAKE ASSEMBLY AND METHOD FOR OPERATING THE SAME
ENSEMBLE FREIN, VÉHICULE ÉQUIPÉ D'UN ENSEMBLE FREIN ET PROCÉDÉ DE FONCTIONNEMENT ASSOCIÉ

(30) Priorität: 21.03.2022 DE 102022202751
(43) Veröffentlichungstag der Anmeldung: 27.09.2023
(73) Patentinhaber: Siemens Mobility GmbH, 81739 München (DE)
(72) Erfinder: Dresel, Florian, 91315 Höchstadt a. d. Aisch (DE); Love, David, 91315 Höchstadt (DE); Schneider, Harald, 1100 Wien (AT); Wiesand, Manfred, 90559 Burgthann (DE)
(74) Vertreter: Siemens Patent Attorneys

(56) Entgegenhaltungen:
- WO-A1-2020/239367
- DE-A1- 102013 224 421

## Beschreibung

Die Erfindung bezieht sich auf eine Bremsanordnung mit zumindest zwei Bremssystemsegmenten.

Die deutsche Offenlegungsschrift DE 10 2013 224 421 A1 offenbart ein Bremssystem, bei dem zum Betätigen von Bremsmitteln eines Fahrzeugs ein von einer Bremsanordnung ausgesteuerter Bremsdruck über einen Bremsdruckpfad auf einen Bremsaktuator wirkt. Um ein besonders sicheres Notlösen der Bremsmittel zu gewährleisten, ist eine mittels einer Notlöseschaltung schaltbare Notlöseventileinrichtung vorgesehen, die im Zuge des Bremsdruckpfades angeordnet ist.

Eine Bremsanordnung mit den Merkmalen gemäß dem Oberbegriff des Patentanspruchs 1 ist aus der internationalen Offenlegungsschrift WO 2020/239367 A1 bekannt.

Der Erfindung liegt die Aufgabe zugrunde, eine Bremsanordnung anzugeben, die eine besonders sichere Bedienung ermöglicht.

Diese Aufgabe wird erfindungsgemäß durch eine Bremsanordnung mit den Merkmalen gemäß Patentanspruch 1 gelöst. Vorteilhafte Ausgestaltungen der erfindungsgemäßen Bremsanordnung sind in Unteransprüchen angegeben.

Ein wesentlicher Vorteil der erfindungsgemäßen Bremsanordnung ist darin zu sehen, dass sich mittels der segmenteigenen Schleppschaltereinrichtungen die Bremseinrichtungen eines einzelnen Bremssystemsegments oder - im Falle einer Mehrzahl an Bremssystemsegmenten - auch mehrerer Bremssystemsegmente deaktivieren lassen. Trotzdem wird zuverlässig verhindert, dass durch Verstellen der individuell und unabhängig voneinander betätigbaren Schleppschaltereinrichtungen - beispielsweise durch Fehlbedienung - gleichzeitig alle Bremsseinrichtungen aller Bremssystemsegmente deaktiviert werden können, sofern dies nicht von extern beispielsweise im Falle eines Abschleppbetriebs gezielt ermöglicht wird. Diese Absicherung bzw. Verriegelung wird erfindungsgemäß dadurch erreicht, dass die Hauptabschaltleitung für ein wirkungsvolles Deaktivieren der Bremseinrichtungen eine elektrische Spannung zur Verfügung stellen muss; dies setzt aber wiederum voraus, dass sich mindestens eine der Schleppschaltereinrichtungen in ihrer Unterstützungsstellung befinden muss. Werden aufgrund einer Fehlbedienung tatsächlich alle Schleppschaltereinrichtungen in ihre Absperrstellung gestellt, so ist die Hauptabschaltleitung spannungsfrei und die Bremseinrichtungen bleiben deaktiviert. Sind tatsächlich alle Bremssystemsegmente von einem Fehler betroffen und sollen tatsächlich alle deaktiviert werden, so ist dies zwar möglich, aber nur, wenn von extern eine elektrische Spannung an die Hauptabschaltleitung angelegt wird, beispielsweise von einem Abschleppfahrzeug im Rahmen eines Abschleppbetriebs.

Als vorteilhaft wird es angesehen, wenn bei jedem der Bremssystemsegmente zwischen der segmenteigenen elektrischen Spannungsquelle und der segmenteigenen Schleppschaltereinrichtung jeweils mindestens ein Schalter angeordnet ist, der mit einer Zentraleinheit der Bremsanordnung in Verbindung steht.

Die Zentraleinheit ist vorzugsweise derart ausgestaltet, dass sie durch Ansteuerung der Schalter ein gleichzeitiges Verbinden von Spannungsquellen zweier Bremssystemsegmente mit der Hauptabschaltleitung verhindert.

Alternativ oder zusätzlich kann in vorteilhafter Weise vorgesehen sein, dass die Zentraleinheit die Schalter der Bremssystemsegmente im Normalbetrieb (also in der Normalbetriebsstellung der Schleppschaltereinrichtungen) zunächst geöffnet hält und nur die Schalter desjenigen Bremssystemsegments schließt, das als einziges oder als erstes in die Unterstützungsstellung geschaltet worden ist.

Die Schleppschaltereinrichtungen weisen vorzugsweise einen Bedienhebel auf, der eine manuelle Bedienung und Verstellung ermöglicht.

Die Schleppschaltereinrichtungen können in unterschiedlicher Art und Weise realisiert werden. Als vorteilhaft wird es jedoch angesehen, wenn die Schleppschaltereinrichtungen einen oder mehr 3-Stellungsschalter aufweisen. Für einen einpoligen Betrieb weisen sie vorzugsweise zwei 3-Stellungsschalter auf und für einen zweipoligen Betrieb weisen sie vorzugsweise vier 3-Stellungsschalter auf.

Jeder der 3-Stellungsschalter umfasst vorzugsweise jeweils einen Schaltkontakt, der eine neutrale bzw. kontaktfreie Normalbetriebsstellung einnehmen kann, bei der der Schaltkontakt von zwei benachbarten Schaltkontakten getrennt ist.

Die 3-Stellungsschalter sind vorzugsweise mechanisch miteinander gekoppelt, sodass alle Schaltkontakte der 3-Stellungsschalter gemeinsam miteinander verstellt werden und alle 3-Stellungsschalter jeweils dieselbe Schaltposition einnehmen.

Die Schleppschaltereinrichtungen bzw. deren 3-Stellungsschalter bieten vorzugsweise keine Schaltstellung an, bei der die segmenteigene Spannungsquelle mit der segmenteigenen Segmentabschaltleitung in Verbindung steht.

Die Bremseinrichtungen können elektrisch betätigbare oder pneumatisch betätigbare Bremseinrichtungen sein.

Im Falle von pneumatisch betätigbaren und elektrisch deaktivierbaren Bremseinrichtungen ist es vorteilhaft, wenn die Bremseinrichtungen jeweils ein elektrisch steuerbares Abschaltelement aufweisen, das in einer Abschaltstellung die Versorgung der jeweiligen Bremseinrichtung mit Druckluft unterbinden kann. Das Abschaltelement kann in vorteilhafter Weise durch ein elektrisch steuerbares Magnetventil gebildet sein oder ein solches umfassen.

Die Erfindung bezieht sich darüber hinaus auf ein Verfahren zum Betrieb einer Bremsanordnung, vorzugsweise einer solchen, wie sie oben beschrieben worden ist. Bezüglich der Vorteile des erfindungsgemäßen Verfahrens und vorteilhafter Ausgestaltungen des erfindungsgemäßen Verfahrens sei auf die obigen Ausführungen im Zusammenhang mit der erfindungsgemäßen Bremsanordnung und deren vorteilhafter Ausgestaltungen verwiesen.

Vorteilhaft ist es, wenn bei Ausfall oder Teilausfall eines der Bremssystemsegmente der Bremsanordnung die Schleppschaltereinrichtung des betroffenen Bremssystemsegments in die Absperrstellung gestellt wird und die Schleppschaltereinrichtung zumindest eines der anderen Bremssystemsegmente in die Unterstützungsstellung gestellt wird.

Bei Ausfall oder Teilausfall aller Bremssystemsegmente ist es vorteilhaft, wenn die Schleppschaltereinrichtungen aller Bremssystemsegmente in die Absperrstellung gestellt werden und an die Hauptabschaltleitung von extern eine elektrische Spannung angelegt wird, um die Bremseinrichtungen tatsächlich zu deaktivieren und einen Abschleppbetrieb zu ermöglichen.

Die Erfindung bezieht sich darüber hinaus auf ein Fahrzeug, insbesondere ein Schienenfahrzeug, wie beispielsweise einen Eisenbahnzug. Erfindungsgemäß ist vorgesehen, dass das Fahrzeug mit einer Bremsanordnung wie oben beschrieben ausgestattet ist.

Bezüglich der Vorteile des erfindungsgemäßen Fahrzeugs und vorteilhafter Ausgestaltungen des erfindungsgemäßen Fahrzeugs sei auf die obigen Ausführungen im Zusammenhang mit der erfindungsgemäßen Bremsanordnung und deren vorteilhafter Ausgestaltungen verwiesen.

Vorteilhaft ist es, wenn das Fahrzeug an jedem seiner beiden Enden eine elektrische Schnittstelle aufweist, die einen Anschluss einer externen Spannungsquelle ermöglicht.

Die Hauptabschaltleitung ist vorzugsweise mit beiden Schnittstellen elektrisch verbunden und kann über diese mit externer elektrischer Energie versorgt bzw. mit elektrischer Spannung beaufschlagt werden. Die Schnittstellen ermöglichen es somit in vorteilhafter Weise, für einen Abschleppbetrieb alle Bremssystemsegmente durch Einspeisen einer externen elektrischen Spannung zu deaktivieren.

Es ist vorteilhaft, wenn die Schleppschalter so angeordnet sind, dass ein unbeabsichtigtes gleichzeitiges Bedienen beider Schleppschalter verhindert wird.

Ist das Fahrzeug mehrgliedrig bzw. umfasst es zwei oder mehr Wagen, so ist es vorteilhaft, wenn eine der Schleppschaltereinrichtungen in einem der Endwagen und eine andere der Schleppschaltereinrichtungen in dem anderen Endwagen angeordnet ist.

Auch kann es unter Umständen vorteilhaft sein, wenn sich zwei benachbarte Bremssystemsegmente einen gemeinsamen Wagen des Schienenfahrzeugs teilen bzw. ein Wagen mit zwei oder mehr Bremssystemsegmenten ausgestattet ist.

Die Erfindung wird nachfolgend anhand von Ausführungsbeispielen näher erläutert, dabei zeigen beispielhaft:
- Figur 1: ein Ausführungsbeispiel für ein erfindungsgemäßes Schienenfahrzeug, das mit einem ersten Ausführungsbeispiel für eine erfindungsgemäße Bremsanordnung ausgestattet ist,
- Figur 2: die Bremsanordnung gemäß Figur 1 näher im Detail,
- Figur 3: ein Ausführungsbeispiel für eine Schleppschaltereinrichtung für die Bremsanordnung gemäß Figur 2,
- Figur 4: ein Ausführungsbeispiel für ein erfindungsgemäßes Schienenfahrzeug, das mit einem zweiten Ausführungsbeispiel für eine erfindungsgemäße Bremsanordnung ausgestattet ist,
- Figur 5: die Bremsanordnung gemäß Figur 4 näher im Detail,
- Fig. 6-7: weitere Ausführungsbeispiele für erfindungsgemäße Schienenfahrzeuge, die mit weiteren Ausführungsbeispiel für erfindungsgemäße Bremsanordnungen ausgestattet sind,
- Figur 8: eine bevorzugte Platzierung zweier Schleppschaltereinrichtungen anhand des Ausführungsbeispiels gemäß Figur 1, und
- Fig. 9-11: ein Ausführungsbeispiel für ein erfindungsgemäßes Schienenfahrzeug mit elektrisch einpoliger Ausgestaltung der Bremsanordnung.

In den Figuren werden der Übersicht halber für identische oder vergleichbare Komponenten dieselben Bezugszeichen verwendet.

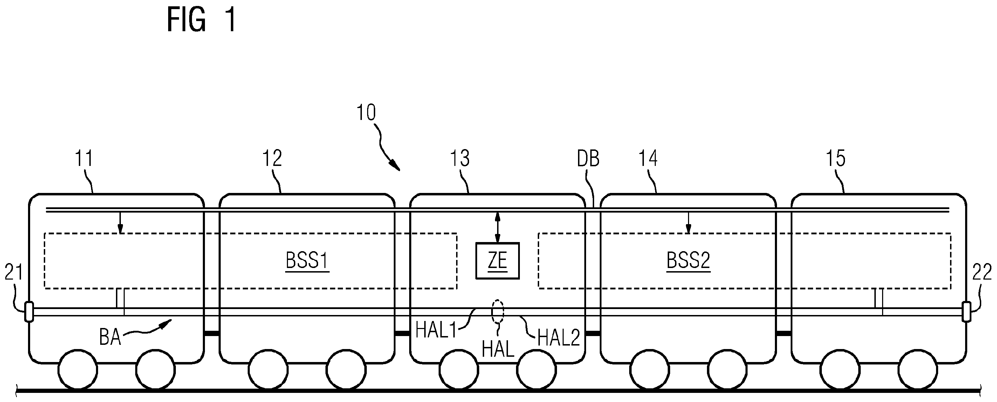

Die Figur 1 zeigt ein Ausführungsbeispiel für ein erfindungsgemäßes Schienenfahrzeug in Form eines Eisenbahnzugs 10, der eine Vielzahl von miteinander gekoppelten Wagen 11 bis 15 umfasst. Die Wagen 11 und 15 sind an den Zugenden des Eisenbahnzugs 10 angeordnet und bilden somit Endwagen.

Der Eisenbahnzug 10 gemäß Figur 1 weist eine Bremsanordnung BA mit zwei Bremssystemsegmenten BSS1 und BSS2 auf, von denen das in der Figur linke mit dem Bezugszeichen BSS1 und das in der Figur rechte mit dem Bezugszeichen BSS2 gekennzeichnet ist. Die beiden Bremssystemsegmente BSS1 und BSS2 erstrecken sich jeweils über mehrere Wagen. Bei dem Ausführungsbeispiel gemäß Figur 1 ist einer der Wagen, beispielsweise der mittlere Wagen 13, mit einem Abschnitt des linken Bremssystemsegments BSS1 und einem Abschnitt des rechten Bremssystemsegments BSS2 ausgestattet.

In der Figur 1 erkennt man darüber hinaus eine elektrische Hauptabschaltleitung HAL, die sich von einem in der Figur 1 linken Zugende des Eisenbahnzugs 10 und einer dort angeordneten Schnittstelle 21 bis zu dem in der Figur 1 rechten Zugende und einer dort angebrachten Schnittstelle 22 erstreckt. Die beiden Schnittstellen 21 und 22 ermöglichen eine externe elektrische Energieversorgung der Hauptabschaltleitung HAL, um die Bremssystemsegmente BSS1 und BSS2 von extern mit Spannung beaufschlagen zu können, beispielsweise im Falle eines externen Abschleppbetriebs.

Durch den Eisenbahnzug 10 erstreckt sich darüber hinaus ein Datenbus DB, der die Bremssystemsegmente BSS1 und BSS2 mit einer Zentraleinheit ZE verbindet. Die Funktion der Zentraleinheit ZE wird weiter unten im Zusammenhang mit der Ausgestaltung der Bremssystemsegmente BSS1 und BSS2 näher erläutert.

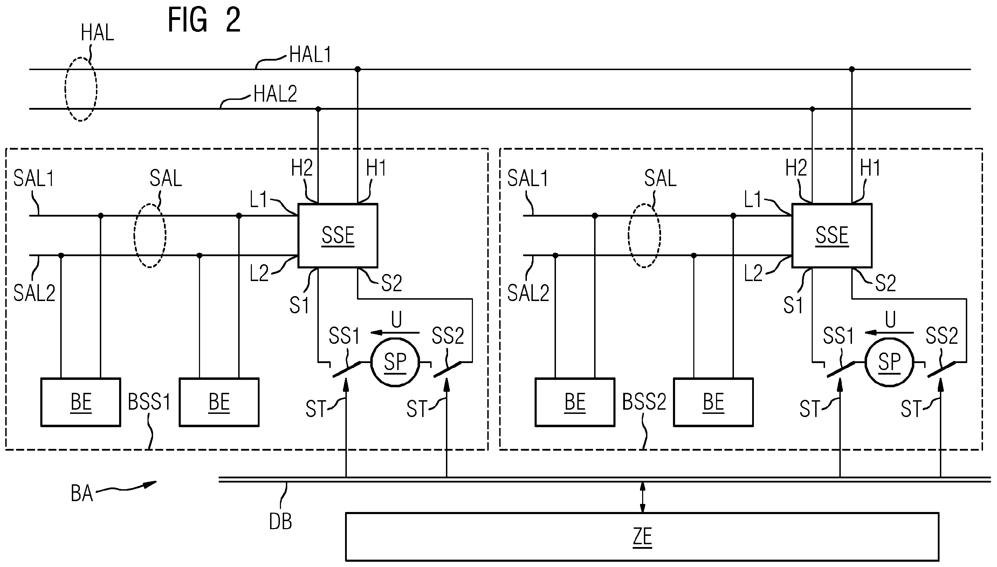

Die Figur 2 zeigt eine vorteilhafte Ausgestaltung des in der Figur 1 linken Bremssystemsegments BSS1 näher im Detail. Das Bremssystemsegment BSS1 umfasst ein oder mehr elektrisch deaktivierbare Bremseinrichtungen BE, die an eine segmenteigene elektrische Segmentabschaltleitung SAL angeschlossen sind. Die Segmentabschaltleitung SAL ist bei dem Ausführungsbeispiel gemäß Figur 2 zweiadrig bzw. zweipolig und umfasst zwei Teilleitungen SAL1 und SAL2, die bei Spannungsbeaufschlagung auf unterschiedlichen elektrischen Potentialen liegen. Beispielsweise kann die Teilleitung SAL1 mit einem positiven Potential und die Teilleitung SAL mit einem negativen Potential beaufschlagt werden.

Das Bremssystemsegment BSS1 umfasst darüber hinaus eine segmenteigene Schleppschaltereinrichtung SSE, die über Anschlüsse L1 und L2 mit der segmenteigenen Segmentabschaltleitung SAL, über Anschlüsse H1 und H2 mit der Hauptabschaltleitung HAL und über Anschlüsse S1 und S2 mit einer segmenteigenen elektrischen Spannungsquelle SP in Verbindung steht.

Elektrische Schalter SS1 und SS2 zwischen der Spannungsquelle SP und der Schleppschaltereinrichtung SSE ermöglichen es der Zentraleinheit ZE, über Steuersignale ST die Spannungsquelle SP von der Schleppschaltereinrichtung SSE zu trennen.

Das in den Figuren 1 und 2 rechte Bremssystemsegment BSS2 kann mit dem linken Bremssystemsegment BSS1 baulich identisch sein, sodass die obigen Ausführungen im Zusammenhang mit dem linken Bremssystemsegment BSS1 für das rechte Bremssystemsegment BSS2 entsprechend gelten.

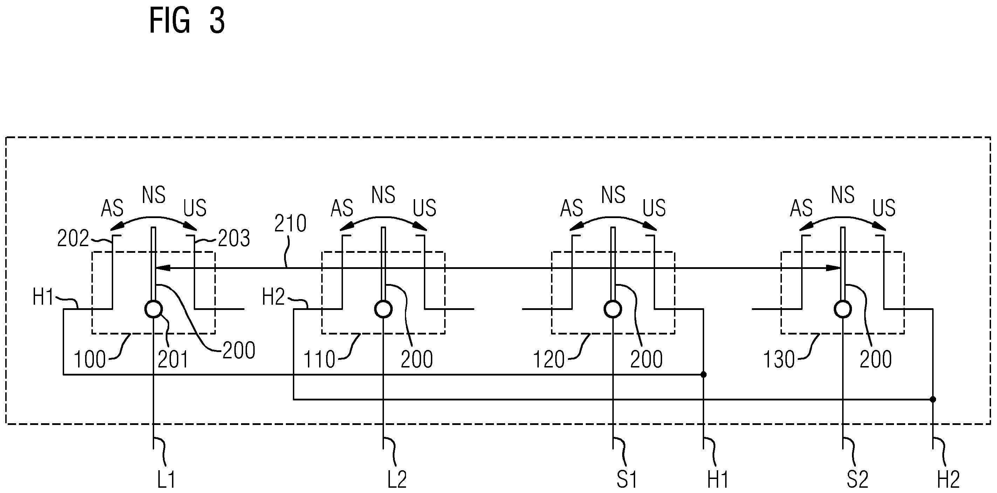

Die Figur 3 zeigt eine vorteilhafte Ausgestaltung der Schleppschaltereinrichtungen SSE gemäß den Figuren 1 und 2 näher im Detail. Es lässt sich erkennen, dass die Schleppschaltereinrichtung SSE vier 3-Stellungsschalter 100, 110, 120 und 130 aufweisen kann.

Jeder der 3-Stellungsschalter umfasst jeweils einen um einen Schwenkpunkt 201 schwenkbaren Schaltkontakt 200, der die in der Figur 1 gezeigte neutrale bzw. kontaktfreie Normalbetriebsstellung NS, bei der der Schaltkontakt 200 von benachbarten Schaltkontakten 202 und 203 getrennt ist, einnehmen kann.

Durch ein Verschwenken des Schaltkontakts 200 im Uhrzeigersinn oder entgegen dem Uhrzeigersinn kann der Schaltkontakt 200 mit dem in der Figur 3 rechten Schaltkontakt 203 oder dem in der Figur 3 linken Schaltkontakt 202 kontaktiert werden, wodurch der 3-Stellungsschalter von der Normalbetriebsstellung NS entweder in eine Absperrstellung AS oder in eine Unterstützungsstellung US der Schleppschaltereinrichtung SSE geschwenkt werden kann.

Die vier 3-Stellungsschalter 100, 110, 120 und 130 sind mechanisch miteinander gekoppelt, wie durch einen Doppelpfeil mit dem Bezugszeichen 210 in Figur 3 angedeutet ist. Wird die Schleppschaltereinrichtung SSE durch äußere mechanische Bedienung eines Bedienhebels durch eine Bedienperson, beispielsweise einen Fahrzeugführer, verstellt, so werden stets alle Schaltkontakte 200 der vier 3-Stellungsschalter gemeinsam miteinander in derselben Schwenkrichtung verschwenkt bzw. verstellt, sodass alle 3-Stellungsschalter 100, 110, 120 und 130 der Schleppschaltereinrichtung SSE jeweils dieselbe Schaltposition einnehmen.

Die Figur 3 lässt darüber hinaus erkennen, dass die Anschlüsse S1 und S2, die mit der segmenteigenen Spannungsquelle SP in Verbindung stehen, ausschließlich mit den Anschlüssen H1 und H2, also mit der Hauptabschaltleitung HAL, verbunden werden können. Die Schleppschaltereinrichtung SSE bzw. ihre 3-Stellungsschalter bieten keine Schaltstellung an, bei der die Anschlüsse S1 und S2 mit den Anschlüssen L1 und L2 verbunden sind, also die segmenteigene Spannungsquelle SP mit der segmenteigenen Segmentabschaltleitung SAL in Verbindung steht. Mit anderen Worten ist die Spannungsquelle SP von der Segmentabschaltleitung SAL des eigenen Bremssystemsegments stets getrennt.

Der Eisenbahnzug 10 gemäß den Figuren 1 bis 3 kann beispielsweise wie folgt betrieben werden:
Kommt es zu einer Störung in einem der Bremssystemsegmente BSS1 oder BSS2, beispielsweise in dem linken Bremssystemsegment BSS1, so kann durch ein Verstellen der segmenteigenen Schleppschaltereinrichtung SSE von der in der Figur 3 gezeigten Normalbetriebsstellung in die Absperrstellung AS erreicht werden, dass die segmenteigene Segmentabschaltleitung SAL des linken Bremssystemsegments BSS1 mit der Hauptabschaltleitung HAL verbunden wird. Durch diese Maßnahme werden die Bremseinrichtungen BE des Bremssystemsegments BSS1 deaktiviert, sofern die Hauptabschaltleitung HAL eine elektrische Spannung führt.

Eine elektrische Spannung an der Hauptabschaltleitung HAL kann - ohne externe Energieversorgung an einer der beiden Schnittstellen 21 oder 22 - bei dem Ausführungsbeispiel gemäß Figur 1 ausschließlich von dem rechten Bremssystemsegment BSS2 geliefert werden, wenn dessen segmenteigene Spannungsquelle SP mit der Hauptabschaltleitung HAL verbunden wird. Dies setzt voraus, dass die Schleppschaltereinrichtung SSE des rechten Bremssystemsegments BSS2 von der in der Figur 3 gestellten Normalbetriebsstellung NS in die Unterstützungsstellung US gestellt wird, damit die Spannungsquelle SP mit den Anschlüssen H1 und H2 bzw. der Hauptabschaltleitung HAL gekoppelt wird.

Ein Abschalten des linken Bremssystemsegments BSS1 erfordert - ohne externe Energieversorgung an einer der beiden Schnittstellen 21 oder 22 - also zweierlei, nämlich ein Umstellen der Schleppschaltereinrichtung SSE des linken Bremssystemsegments BSS1 in die Absperrstellung AS und ein Umstellen der Schleppschaltereinrichtung SSE des rechten Bremssystemsegments BSS2 in die Unterstützungsstellung US. Nur dann kommt es tatsächlich zu einem Deaktivieren der Bremseinrichtungen BE des linken Bremssystemsegments BSS1.

Ein Stellen einer der Schleppschaltereinrichtungen SSE in die Absperrstellung AS führt also nur dann tatsächlich zu einer Aktivierung der zugehörigen Bremseinrichtungen BE, wenn gleichzeitig auch die Schleppschaltereinrichtung SSE zumindest eines anderen Bremssystemsegments des Eisenbahnzugs 10 in die Unterstützungsstellung US gestellt wird. Ist dies nicht der Fall, so fehlt es in der Hauptabschaltleitung HAL an elektrischer Spannung, die eine Deaktivierung der Bremseinrichtungen BE bewirken würde.

Die Schleppschaltereinrichtungen SSE garantieren somit eine Verriegelung untereinander, sodass sich der Eisenbahnzug 10 hinsichtlich seiner Bremswirkung nicht selbsttätig komplett deaktivieren kann; denn es fehlt an elektrischer Spannung an der Hauptabschaltleitung HAL, falls sich alle Schleppschaltereinrichtungen SSE in der Absperrstellung AS befinden. Ein Deaktivieren aller Bremssystemsegmente BSS1 und BSS2 ist also nur möglich, wenn von extern über eine der Schnittstellen 21 und 22 elektrische Spannung an die Hauptabschaltleitung HAL angelegt wird.

Sind alle Bremssystemsegmente ausgefallen und muss der Eisenbahnzug 10 abgeschleppt werden, so werden alle Schleppschaltereinrichtungen SSE jeweils in ihre Absperrstellung AS gestellt, wodurch alle segmenteigenen Segmentabschaltleitungen SAL mit der Hauptabschaltleitung HAL verbunden werden und alle segmenteigenen Spannungsquellen abgetrennt werden. In einem solchen Betriebszustand kann dann über eine der beiden Schnittstellen 21 oder 22 die Hauptabschaltleitung HAL mit elektrischer Spannung beaufschlagt werden, um die Deaktivierung aller Bremseinrichtungen BE aller Bremssystemsegmente von außen zu erzwingen und ein Abschleppen des Eisenbahnzugs 10 zu ermöglichen.

Eine Funktion der Zentraleinheit ZE besteht darin, eine gleichzeitige Verbindung zwischen den Spannungsquellen SP zweier oder mehr Bremssystemsegmente und das Fließen von Ausgleichsströmen zwischen den Spannungsquellen SP im Falle von Spannungsdifferenzen zu vermeiden, wenn zwei oder mehr Schleppschaltereinrichtungen SSE in die Unterstützungsstellung geschaltet werden. Zu diesem Zwecke ist die Zentraleinheit ZE vorzugsweise derart ausgestaltet, dass sie durch Steuersignale ST die Schalter SS1 und SS2 nur einer der in die Unterstützungsstellung US geschalteten Bremssystemsegmente schließt oder geschlossen lässt und die übrigen öffnet oder geöffnet lässt.

Alternativ oder zusätzlich kann eine Funktion der Zentraleinheit ZE darin bestehen, die Schalter SS1 und SS2 der Bremssystemsegmente im Normalbetrieb zunächst geöffnet zu halten und nur die Schalter SS1 und SS2 desjenigen Bremssystemsegments zu schließen, das als einziges oder als erstes in die Unterstützungsstellung US geschaltet worden ist.

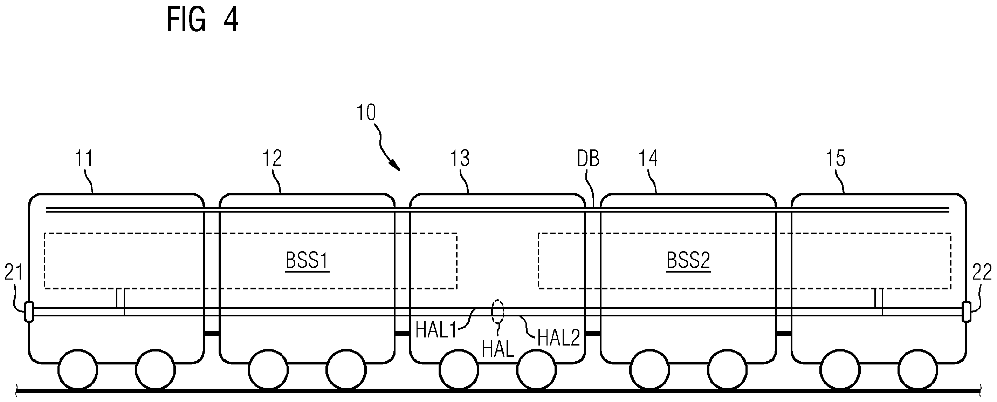

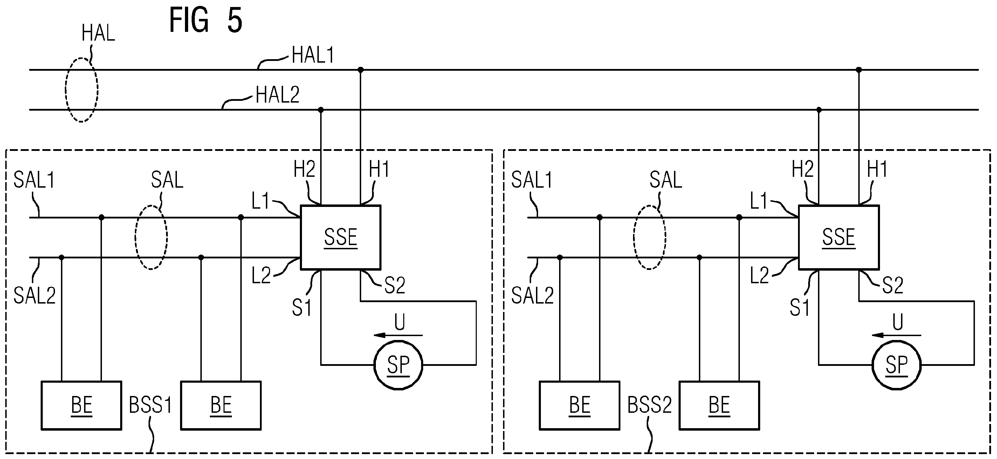

Die Figuren 4 und 5 zeigen ein weiteres Ausführungsbeispiel für ein erfindungsgemäßes Schienenfahrzeug und dessen Ausgestaltung der Bremssystemsegmente BSS1 und BSS2. Bei dem Ausführungsbeispiel gemäß den Figuren 4 und 5 sind die Spannungsquellen SP stets mit der zugeordneten Schleppschaltereinrichtung SSE verbunden. Werden zwei oder mehr Schleppschaltereinrichtungen SSE in die Unterstützungsstellung US gestellt, so werden etwaige Ausgleichsströme zwischen den Spannungsquellen SP in Kauf genommen.

Im Übrigen gelten die obigen Ausführungen im Zusammenhang mit den Figuren 1 bis 3 bei dem Ausführungsbeispiel gemäß den Figuren 4 und 5 entsprechend.

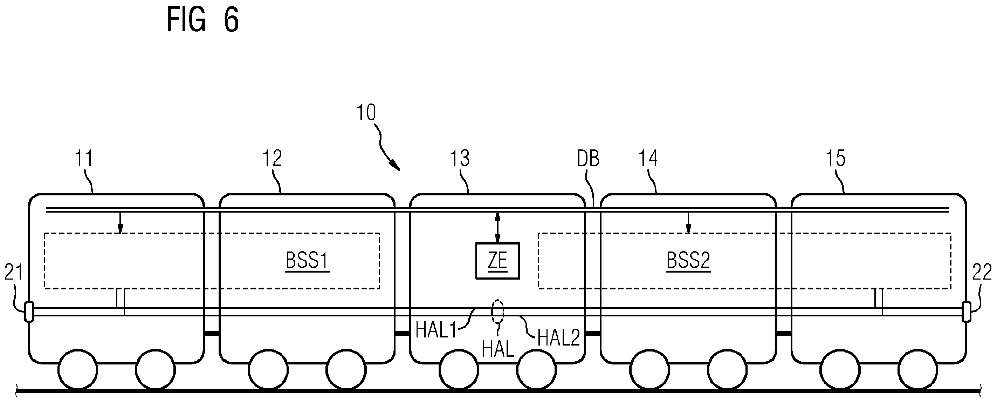

Die Figur 6 zeigt ein weiteres Ausführungsbeispiel für ein erfindungsgemäßes Schienenfahrzeug in Form eines Eisenbahnzugs 10. Der Eisenbahnzug 10 gemäß Figur 6 weist zwei Bremssystemsegmente BSS1 und BSS2 auf, die anders auf die Wagen 11 bis 15 des Eisenbahnzugs 10 aufgeteilt sind als bei dem Eisenbahnzug 10 gemäß Figur 1. Im Übrigen gelten die obigen Ausführungen im Zusammenhang mit den Figuren 1 bis 5 bei dem Ausführungsbeispiel gemäß Figur 6 entsprechend.

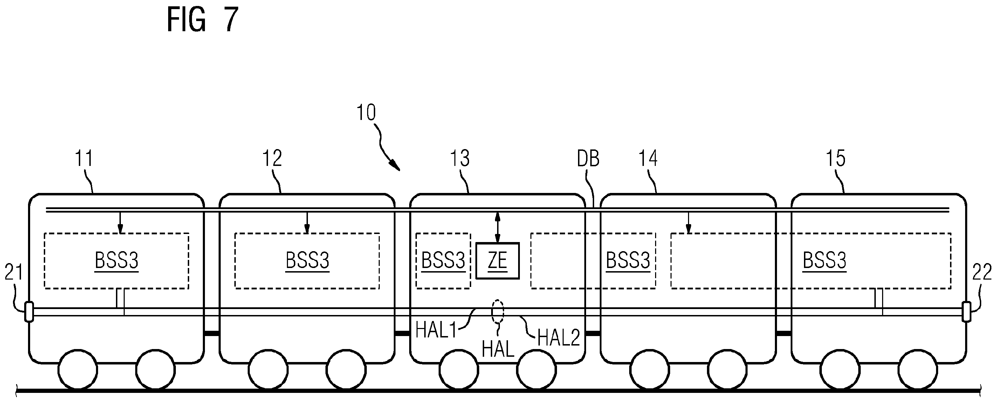

Die Figur 7 zeigt ein weiteres Ausführungsbeispiel für ein erfindungsgemäßes Schienenfahrzeug in Form eines Eisenbahnzugs 10. Der Eisenbahnzug 10 gemäß Figur 7 weist eine Vielzahl von Bremssystemsegmenten BSS3 auf, die so ausgestaltet sein können wie die in Figur 2 oder 5 gezeigten Bremssystemsegmente BSS1 und BSS2. Im Übrigen gelten die obigen Ausführungen im Zusammenhang mit den Figuren 1 bis 5 bei dem Ausführungsbeispiel gemäß Figur 7 entsprechend.

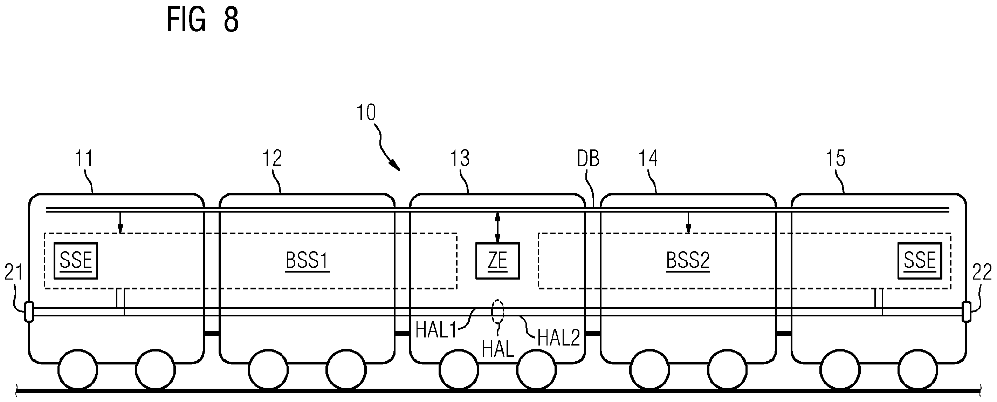

Bezüglich der räumlichen Anordnung der Schleppschaltereinrichtungen SSE wird es - mit Blick auf eine bequeme zugführerseitige Bedienung - als vorteilhaft angesehen, wenn in jedem der Endwagen jeweils eine Schleppschaltereinrichtung SSE vorhanden ist, wie Figur 8 beispielhaft für den Eisenbahnzug 10 gemäß Figur 1 zeigt.

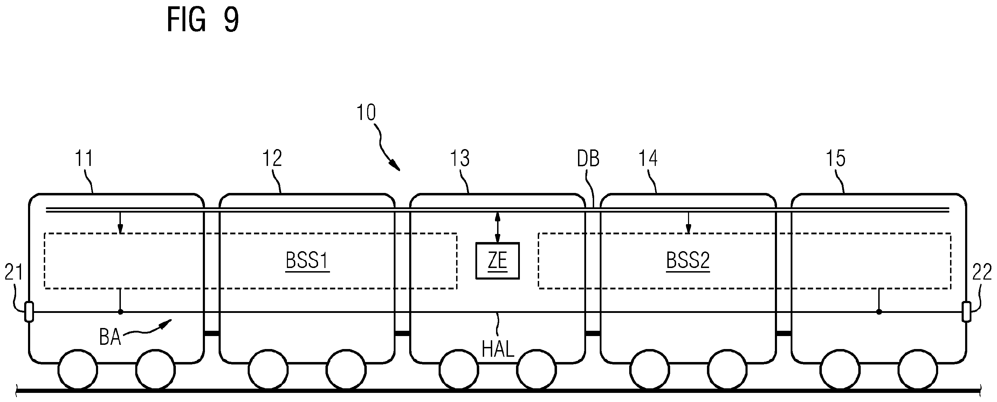

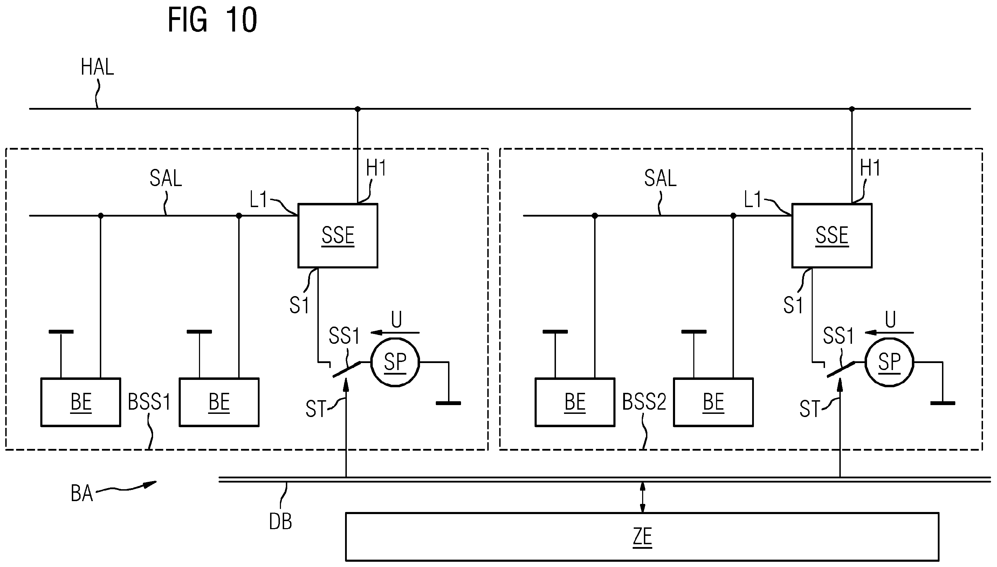

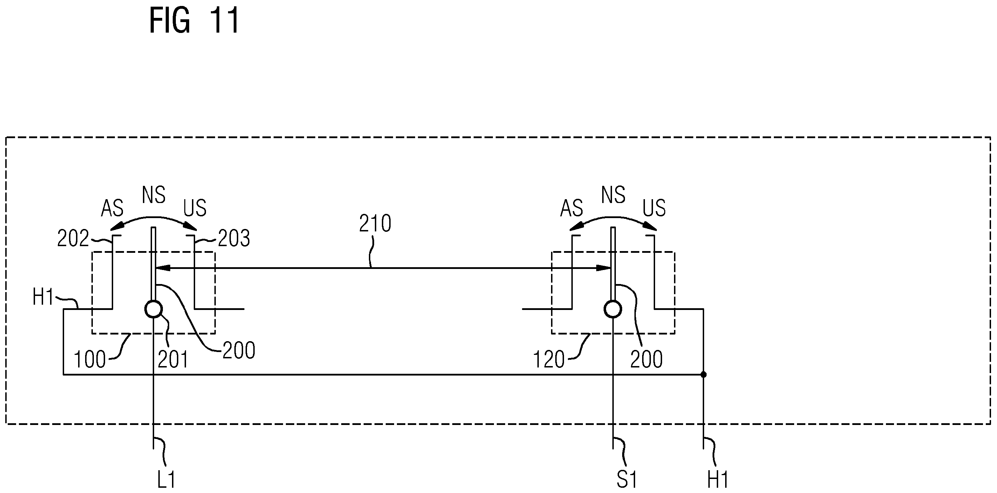

Die Hauptabschaltleitung HAL und die Segmentabschaltleitungen SAL können auch einadrig bzw. einpolig sein, beispielsweise wenn einer der beiden Anschlüsse der Bremseinrichtungen BE jeweils auf Massepotential liegt. Eine solche Ausgestaltung zeigen beispielhaft die Figuren 9 und 10. In einem solchen Falle ist es ausreichend, wenn die Schleppschaltereinrichtungen SSE nur zwei 3-Stellungsschalter 100 und 120 aufweisen, wie die Figur 11 beispielhaft zeigt.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden. Auch können alle Merkmale von Unteransprüchen jeweils für sich mit jedem der nebengeordneten Ansprüche kombiniert werden, und zwar jeweils für sich allein oder in beliebiger Kombination mit einem oder anderen Unteransprüchen, um weitere andere Ausführungsbeispiele zu erhalten.

### Bezugszeichen

- 10: Eisenbahnzug
- 11-15: Wagen
- 21: Schnittstelle
- 22: Schnittstelle
- 100-130: 3-Stellungsschalter
- 200: Schaltkontakt
- 201: Schwenkpunkt
- 202: Schaltkontakt
- 203: Schaltkontakt
- 210: Kopplung / Doppelpfeil

- AS: Absperrstellung
- BA: Bremsanordnung
- BE: Bremseinrichtung
- BSS1: Bremssystemsegment
- BSS2: Bremssystemsegment
- BSS3: Bremssystemsegment
- DB: Datenbus
- HAL: elektrische Hauptabschaltleitung
- H1, H2: Anschlüsse
- L1, L2: Anschlüsse
- NS: neutrale bzw. kontaktfreie Normalbetriebsstellung
- SAL: elektrische Segmentabschaltleitung
- SAL1: Teilleitung
- SAL2: Teilleitung
- SP: elektrische Spannungsquelle
- SS1: Schalter
- SS2: Schalter
- SSE: segmenteigene Schleppschaltereinrichtung
- ST: Steuersignale
- S1, S2: Anschlüsse US Unterstützungsstellung
- ZE: Zentraleinheit

## Patentansprüche

1. Bremsanordnung (BA) mit zumindest zwei Bremssystemsegmenten (BSS1, BSS2, BSS3), wobei die Bremsanordnung (BA) eine elektrische Hauptabschaltleitung (HAL) aufweist und
die Bremssystemsegmente (BSS1, BSS2, BSS3) jeweils
- eine segmenteigene elektrische Segmentabschaltleitung (SAL), die mit mindestens einer segmenteigenen, elektrisch durch Spannungsbeaufschlagung deaktivierbaren Bremseinrichtung (BE) in Verbindung steht,
- eine segmenteigene elektrische Spannungsquelle (SP) und
- eine segmenteigene Schleppschaltereinrichtung (SSE), die eine Normalbetriebsstellung (NS), eine Absperrstellung (AS) und eine Unterstützungsstellung (US) einnehmen kann, aufweisen,
**dadurch gekennzeichnet, dass**
die segmenteigenen Schleppschaltereinrichtungen (SSE) voneinander unabhängig verstellbar sind und jeweils
- in der Normalbetriebsstellung (NS) sowohl ihre Spannungsquelle (SP) als auch ihre Segmentabschaltleitung (SAL) von der Hauptabschaltleitung (HAL) trennen,
- in der Absperrstellung (AS) ihre Segmentabschaltleitung (SAL) mit der Hauptabschaltleitung (HAL) verbinden und ihre Spannungsquelle (SP) von der Hauptabschaltleitung (HAL) trennen,
- in der Unterstützungsstellung (US) ihre Segmentabschaltleitung (SAL) von der Hauptabschaltleitung (HAL) trennen und ihre Spannungsquelle (SP) mit der Hauptabschaltleitung (HAL) verbinden und
- unabhängig von ihrer Schaltstellung ihre segmenteigene elektrische Spannungsquelle (SP) von ihrer segmenteigenen elektrischen Segmentabschaltleitung (SAL) stets getrennt halten.

2. Bremsanordnung (BA) nach Anspruch 1,
**dadurch gekennzeichnet, dass**
bei jedem der Bremssystemsegmente (BSS1, BSS2, BSS3) zwischen der segmenteigenen elektrischen Spannungsquelle (SP) und der segmenteigenen Schleppschaltereinrichtung (SSE) jeweils mindestens ein Schalter (SS1, SS2) angeordnet ist, der mit einer Zentraleinheit (ZE) der Bremsanordnung (BA) in Verbindung steht.

3. Bremsanordnung (BA) nach Anspruch **2,**
**dadurch gekennzeichnet, dass**
die Zentraleinheit (ZE) derart ausgestaltet ist, dass sie durch Ansteuerung der Schalter (SS1, SS2) ein gleichzeitiges Verbinden von Spannungsquellen (SP) zweier oder mehr Bremssystemsegmente (BSS1, BSS2, BSS3) mit der Hauptabschaltleitung (HAL) verhindert.

4. Bremsanordnung (BA) nach Anspruch 2 oder 3,
**dadurch gekennzeichnet, dass**
die Zentraleinheit (ZE) derart ausgestaltet ist, dass sie die Schalter (SS1, SS2) der Bremssystemsegmente (BSS1, BSS2, BSS3) in der Normalbetriebsstellung (NS) der Schleppschaltereinrichtungen (SSE) zunächst geöffnet hält und nur die Schalter (SS1, SS2) desjenigen Bremssystemsegments schließt, das als einziges oder als erstes in die Unterstützungsstellung (US) geschaltet wird.

5. Bremsanordnung (BA) nach einem der voranstehenden Ansprüche,
**dadurch gekennzeichnet, dass**
die Schleppschaltereinrichtungen (SSE) einen Bedienhebel aufweisen, der eine manuelle Bedienung und Verstellung ermöglicht.

6. Bremsanordnung (BA) nach einem der voranstehenden Ansprüche,
**dadurch gekennzeichnet, dass**
die Schleppschaltereinrichtungen (SSE) jeweils zumindest zwei 3-Stellungsschalter (100, 110, 120, 130) aufweisen.

7. Bremsanordnung (BA) nach einem der voranstehenden Ansprüche,
**dadurch gekennzeichnet, dass**
die Bremseinrichtungen (BE) elektrisch deaktivierbare und pneumatisch betätigbare Bremseinrichtungen (BE) sind.

8. Bremsanordnung (BA) nach Anspruch 7
**dadurch gekennzeichnet, dass**
die Bremseinrichtungen (BE) jeweils ein elektrisch steuerbares Abschaltelement aufweisen, das in der Absperrstellung (AS) der Schleppschaltereinrichtung (SSE) die Versorgung der jeweiligen Bremseinrichtung (BE) mit Druckluft unterbinden kann.

9. Bremsanordnung (BA) nach Anspruch 8,
**dadurch gekennzeichnet, dass**
das Abschaltelement ein elektrisch steuerbares Magnetventil ist.

10. Verfahren zum Betrieb einer Bremsanordnung (BA),
**dadurch gekennzeichnet, dass**
eine Bremsanordnung (BA) nach einem der voranstehenden Ansprüche betrieben wird,
- wobei bei Ausfall oder Teilausfall eines der Bremssystemsegmente (BSS1, BSS2, BSS3) die Schleppschaltereinrichtung (SSE) des betroffenen Bremssystemsegments in die Absperrstellung (AS) gestellt wird, und die Schleppschaltereinrichtung (SSE) zumindest eines der anderen Bremssystemsegmente (BSS1, BSS2, BSS3) in die Unterstützungsstellung (US) gestellt wird, und/oder
- wobei bei Ausfall oder Teilausfall aller Bremssystemsegmente (BSS1, BSS2, BSS3) die Schleppschaltereinrichtungen (SSE) aller Bremssystemsegmente (BSS1, BSS2, BSS3) in die Absperrstellung (AS) gestellt werden und an die Hauptabschaltleitung (HAL) eine externe elektrische Spannung angelegt wird.

11. Fahrzeug, insbesondere Schienenfahrzeug,
**dadurch gekennzeichnet, dass**
das Fahrzeug mit einer Bremsanordnung (BA) nach einem der voranstehenden Ansprüche 1 bis 9 ausgestattet ist.

12. Fahrzeug nach Anspruch 11,
**dadurch gekennzeichnet, dass**
- das Fahrzeug an jedem seiner beiden Enden eine elektrische Schnittstelle (21, 22) aufweist, die einen Anschluss einer externen Spannungsquelle (SP) ermöglicht, und
- die Hauptabschaltleitung (HAL) mit beiden Schnittstellen (21, 22) elektrisch verbunden ist und über jede von diesen mit elektrischer Spannung versorgt werden kann.

13. Fahrzeug nach Anspruch 11 oder 12,
**dadurch gekennzeichnet, dass**
- das Fahrzeug an jedem seiner beiden Enden einen Endwagen (11, 15) aufweist und
- eine der Schleppschaltereinrichtungen (SSE) in einem der Endwagen (11) und eine andere der Schleppschaltereinrichtungen (SSE) in dem anderen Endwagen (15) angeordnet ist.

## Claims

1. Brake arrangement (BA) with at least two brake system segments (BSS1, BSS2, BSS3), wherein the brake arrangement (BA) has an electrical main shut-down line (HAL) and
the brake system segments (BSS1, BSS2, BSS3) in each case have
- a segment-specific electrical segment shut-down line (SAL), which is connected to at least one segment-specific brake facility (BE) that can be electrically deactivated through the application of a voltage,
- a segment-specific electrical voltage source (SP) and
- a segment-specific towing switch facility (SSE), which can assume a normal operating position (NS), a blocking position (AS) and a supporting position (US),
**characterised in that**
the segment-specific towing switch facilities (SSE) can be adjusted independently of one another, and in each case,
- isolate both their voltage source (SP) and their segment shut-down line (SAL) from the main shut-down line (HAL) in the normal operating position (NS),
- connect their segment shut-down line (SAL) to the main shut-down line (HAL) and isolate their voltage source (SP) from the main shut-down line (HAL) in the blocking position (AS),
- isolate their segment shut-down line (SAL) from the main shut-down line (HAL) and connect their voltage source (SP) to the main shut-down line (HAL) in the supporting position (US), and
- keep their segment-specific electrical voltage source (SP) isolated from their segment-specific electrical segment shut-down line (SAL) at all times, regardless of their switching position.

2. Brake arrangement (BA) according to claim 1,
**characterised in that**
for each of the brake system segments (BSS1, BSS2, BSS3), at least one switch (SS1, SS2), which is connected to a central unit (ZE) of the brake arrangement (BA), is arranged between the segment-specific electrical voltage source (SP) and the segment-specific towing switch facility (SSE) in each case.

3. Brake arrangement (BA) according to claim **2,**
**characterised in that**
the central unit (ZE) is embodied in such a manner that, through activation of the switches (SS1, SS2), it prevents a simultaneous connection of voltage sources (SP) of two or more brake system segments (BSS1, BSS2, BSS3) to the main shut-down line (HAL).

4. Brake arrangement (BA) according to claim 2 or **3,**
**characterised in that**
the central unit (ZE) is embodied in such a manner that it first keeps the switches (SS1, SS2) of the brake system segments (BSS1, BSS2, BSS3) open in the normal operating position (NS) of the towing switch facilities (SSE), and only closes the switches (SS1, SS2) of the brake system segment which is switched as the only or first one in the supporting position (US).

5. Brake arrangement (BA) according to one of the preceding claims,
c**haracterised in** that
the towing switch facilities (SSE) have an operating lever which enables a manual operation and adjustment.

6. Brake arrangement (BA) according to one of the preceding claims,
**characterised in that**
the towing switch facilities (SSE) each have at least two three-position switches (100, 110, 120, 130).

7. Brake arrangement (BA) according to one of the preceding claims,
**characterised in that**
the brake facilities (BE) are electrically deactivatable and pneumatically operable brake facilities (BE).

8. Brake arrangement (BA) according to claim 7,
**characterised in that**
the brake facilities (BE) each have an electrically controllable shut-down element, which is able to suppress the supply of compressed air to the respective brake facility (BE) in the blocking position (AS) of the towing switch facility (SSE).

9. Brake arrangement (BA) according to claim 8,
**characterised in that**
the shut-down element is an electronically controllable magnetic valve.

10. Method for operating a brake arrangement (BA),
**characterised in that**
a brake arrangement (BA) according to one of the preceding claims is operated,
- wherein, in the event of a failure or partial failure of one of the brake system segments (BSS1, BSS2, BSS3), the towing switch facility (SSE) of the brake system segment in question is set to the blocking position (AS), and the towing switch facility (SSE) of at least one of the other brake system segments (BSS1, BSS2, BSS3) is set to the supporting position (US), and/or
- wherein, in the event of a failure or partial failure of all brake system segments (SSE), the towing switch facilities (SSE) of all brake system segments (BSS1, BSS2, BSS3) are set to the blocking position (AS) and an external electrical voltage is applied to the main shut-down line (HAL).

11. Vehicle, in particular rail vehicle,
**characterised in that**
the vehicle is equipped with a brake arrangement (BA) according to one of the preceding claims 1 to **9.**

12. Vehicle according to claim 11,
**characterised in that**
- the vehicle has an electrical interface (21, 22), which enables a connection of an external voltage source (SP), at each of its two ends, and
- the main shut-down line (HAL) is electrically connected to both interfaces (21, 22) and can be supplied with electrical voltage via both of said interfaces.

13. Vehicle according to claim 11 or 12,
**characterised in that**
- the vehicle has an end car (11, 15) at each of its two ends, and
- one of the towing switch facilities (SSE) is arranged in one of the end cars (11) and another of the towing switch facilities (SSE) is arranged in the other end car (15).

## Revendications

1. Agencement (BA) de freinage comprenant au moins deux segments (BSS1, BSS2, BSS3) de système de freinage, dans lequel l'agencement (BA) de freinage a une ligne (HAL) électrique principale de mise hors circuit et les segments (BSS1, BSS2, BSS3) de système de freinage ont respectivement
- une ligne (SAL) électrique propre au segment de mise hors circuit du segment, qui est en liaison avec au moins un dispositif (BE) de freinage propre au segment et pouvant être désactivé électriquement par une alimentation en tension,
- une source (SP) électrique de tension propre au segment et
- un dispositif (SSE) de commutation à mise en contact progressive propre au segment, qui peut prendre une position (NS) de fonctionnement normal, une position (AS) d'arrêt et une position (US) de soutien,
**caractérisé en ce que**
les dispositifs (SSE) de commutation à mise en contact progressive propre au segment sont réglables indépendamment les uns des autres et respectivement
- dans la position (NS) de fonctionnement normal, séparent, de la ligne (HAL) principale de mise hors circuit, tant sa source (SP) de tension qu'également sa ligne (SAL) de mise hors circuit de segment,
- dans la position (AS) d'arrêt, relient sa ligne (SAL) de mise hors circuit de segment à sa ligne (HAL) de mise hors circuit principale et séparent sa source (SP) de tension de la ligne (HAL) principale de mise hors circuit,
- dans la position (US) de soutien, séparent sa ligne (SAL) de mise hors circuit de segment de la ligne (HAL) principale de mise hors circuit et relient sa source (SP) de tension à la ligne (HAL) principale de mise hors circuit, et
- indépendamment de sa position de commutation, maintient toujours sa source (SP) électrique de tension propre au segment séparée de sa ligne (SAL) électrique de mise hors circuit de segment propre au segment.

2. Agencement (BA) de freinage suivant la revendication 1,
**caractérisé en ce que**,
pour chacun des segments (BSS1, BSS2, BSS3) de système de freinage, il est monté respectivement, entre la source (SP) de tension électrique propre au segment et le dispositif (SSE) de commutation à mise à contact progressive propre au segment, au moins un interrupteur (SS1, SS2), qui est en liaison avec une unité (ZE) centrale de l'agencement (BA) de freinage.

3. Agencement (BA) de freinage suivant la revendication 2,
**caractérisé en ce que**
l'unité (ZE) centrale est conformée de manière à empêcher, par commande des interrupteurs (SS1, SS2), une liaison simultanée de sources (SP) de tension de deux ou de plusieurs segments (BSS1, BSS2, BSS3) de système de freinage à la ligne (HAL) principale de mise hors circuit.

4. Agencement (BA) de freinage suivant la revendication 2 ou 3,
**caractérisé en ce que**
l'unité (ZE) centrale est conformée de manière à maintenir d'abord ouverts les interrupteurs (SS1, SS2) des segments (BSS1, BSS2, BSS3) de système de freinage dans la position (NS) de fonctionnement normal des dispositifs (SSE) de commutation à mise en contact progressive et à ne fermer que les interrupteurs (SS1, SS2) du segment de système de freinage, qui est seul ou en premier dans la position (US) de soutien.

5. Agencement (BA) de freinage suivant l'une des revendications précédentes,
**caractérisé en ce que**
les dispositifs (SSE) de commutation à mise en contact progressive ont un levier de manœuvre, qui rend possible une manœuvre et un réglage manuel.

6. Agencement (BA) de freinage suivant l'une des revendications précédentes,
**caractérisé en ce que**
les dispositifs (SSE) de commutation à mise en contact progressive ont respectivement au moins deux interrupteurs (100, 110, 120, 130) à trois positions.

7. Agencement (BA) de freinage suivant l'une des revendications précédentes,
**caractérisé en ce que**
les dispositifs (BE) de freinage peuvent être désactivés électriquement et sont des dispositifs (BE) de freinage pouvant être actionnés pneumatiquement.

8. Agencement (BA) de freinage suivant la revendication 7,
**caractérisé en ce que**
les dispositifs (BE) de freinage ont chacun un élément de mise hors circuit électrique pouvant être commandé qui, dans la position (AS) d'arrêt du dispositif (SSE) de commutation à mise en contact progressive, peut supprimer l'alimentation en air comprimé du dispositif (BE) de freinage respectif.

9. Agencement (BA) de freinage suivant la revendication 8,
**caractérisé en ce que**
l'élément de mise hors circuit est une électrovanne pouvant être commandée électriquement.

10. Procédé pour faire fonctionner un agencement (BA) de freinage,
**caractérisé en ce que**
un agencement (BA) de freinage suivant l'une des revendications précédentes est mis en fonctionnement,
- dans lequel, si l'un des segments (BSS1, BSS2, BSS3) de système de freinage est défaillant ou partiellement défaillant, on met le dispositif (SSE) de commutation à mise en contact progressive du segment concerné du système de freinage dans la position (AS) d'arrêt, et on met le dispositif (SSE) de commutation à mise en contact progressive d'au moins l'un des autres segments (BSS1, BSS2, BSS3) de système de freinage dans la position (US) de soutien, et/ou
- dans lequel, si tous les segments (BSS1, BSS2, BSS3) de système de freinage sont défaillants ou défaillants partiellement, on met les dispositifs (SSE) de commutation à mise en contact progressive de tous les segments (BSS1, BSS2, BSS3) de système de freinage dans la position (AS) d'arrêt et on applique une tension électrique extérieure à la ligne (HAL) principale de mise hors circuit.

11. Véhicule, en particulier véhicule ferroviaire,
**caractérisé en ce que**
le véhicule est équipé d'un agencement (BA) de freinage suivant l'une des revendications 1 à 9 précédentes.

12. Véhicule suivant la revendication 11,
**caractérisé en ce que**
- le véhicule a, à chacun de ses deux bouts, une interface (21, 22) électrique, qui rend possible une connexion d'une source (SP) extérieure de tension, et
- la ligne (HAL) principale de mise hors circuit est reliée électriquement aux deux interfaces (21, 22) et peut être alimentée par chacune d'entre elles en une tension électrique.

13. Véhicule suivant la revendication 11 ou 12,
**caractérisé en ce que**
- le véhicule a, à chacun de ses deux bouts, une voiture (11, 15) d'extrémité et
- l'un des dispositifs (SSE) de commutation à mise en contact progressive est disposé dans l'une des voitures (11) d'extrémité et un autre des dispositifs (SSE) de commutation à mise en contact progressive dans l'autre voiture (15) d'extrémité.
